# EUROPEAN PATENT SPECIFICATION

(11) **EP 3 805 649 B1**
(45) Date of publication and mention of the grant of the patent: **15.05.2024**
(21) Application number: 20200336.4
(22) Date of filing: 06.10.2020
(51) Int. Cl.: F24D 13/02, E04F 15/18, H05B 3/00, F24D 3/12, E04F 13/074, E04F 13/08, E04F 15/10, H05B 3/26

(54) **CONSTRUCTION PANEL**
KONSTRUKTIONSPANEEL
PANNEAU DE CONSTRUCTION

(30) Priority: 07.10.2019 BE 201905657
(43) Date of publication of application: 14.04.2021
(73) Proprietor: Nijs, Guido, 3680 Neeroeteren (BE)
(72) Inventor: Nijs, Guido, 3680 Neeroeteren (BE)
(74) Representative: Arnold & Siedsma

(56) References cited:
- WO-A1-2006/103081
- WO-A2-2006/103080
- DE-A1- 3 423 999
- GB-A- 2 265 211
- KR-B1- 100 404 916
- NL-A- 7 411 820

## Description

The invention relates to a construction panel for constructing a floor or wall.

A floor or wall is typically constructed with a base layer and a finishing layer. The primary function of the base layer is here to impart sufficient strength to the floor or wall. The primary function of the finishing layer is an aesthetic one. In exceptional cases the top layer of the base layer is used directly as finishing layer. An example hereof is polished concrete. For walls, a choice is made in exceptional cases not to finish the base layer further when the structure of the base layer is deemed sufficiently aesthetic. An example hereof is a brick wall which is visually unfinished.

In most building projects a choice is made to construct a wall or floor from multiple layers, wherein each layer fulfils one or more functions. Insulating layers can thus be added, sound-damping layers can be added, heating layers can be added, finishing layers can be added and/or other functional layers can be added. When multiple layers are used in practice for constructing a floor or wall, it has been found that the experience and precision of the workers constructing the floor or wall have a significant effect on the quality of the floor or wall. Construction faults are difficult to correct, and quality is difficult to guarantee.

The invention relates to construction panels for constructing a floor or wall. Such construction panels are also referred to in the field as prefab components. These are components which have been preassembled and constructed in a manner such that a floor or wall can be constructed with a plurality of such construction panels. The advantage of a construction panel is that the manufacture thereof typically takes place in a controlled environment. Construction panels are typically made in a workshop or in a factory. These construction panels can be produced in both semi- and fully automated production lines. The workers manufacturing the construction panel can easily be given optimal tools, materials and knowledge, so that the quality of the construction panels can be guaranteed. The adverse effects of a manufacturing fault in the construction panel for a floor or wall can be eliminated in extremely simple manner by not using the faulty construction panel in the floor or wall. Further advantages of factory production include reduced energy consumption, a better CO₂ balance, and a smaller amount of waste and residual material. For the above stated reasons the use of pre-manufactured construction panels for constructing a floor or wall has considerable advantages relative to manufacturing the floor or wall on site.

GB2265211 describes a panel heater comprising a slab shaped body member formed by a shell having a main heat exchange surface. A heating element is embedded in a matrix of fire retardant material within the shell. The matrix is a mix of sand, cement and polymers. An insulating panel is located within the shell between the heating element and the bottom surface. The element is an electric element with cables delivering electrical power thereto. The heating element and matrix are mounted within a sheet metal housing within the shell and the shell is made of a polyester resin reinforced with glass fibre.

WO2006/103081 describes a panel heating device for placing in the floor area, comprising an electrically conductive layer and electrical supply lines. In order to provide a floor heating system having a low overall height while simultaneously damping noises, at least one sound-damping layer is provided.

KR 100 404 916 describes a method of manufacturing an electric panel in which a heating wire is completely integrally buried the electric panel. The method comprises the steps of making a stone into powder, mixing the powder with a solution, pouring the solution in which powder is mixed into a manufacturing frame, placing a heating wire on the upper surface before the solution in which the powder is mixed is solidified, filling the upper part of the heating wire with a mixed solution to the full height of the panel, and solidifying the solution mixed with powder with a heating wire buried therein

A known challenge in constructing a floor or wall with one or more construction panels is related to the transport and ease of handling of the construction panels. Traditional construction materials with which floors and walls are constructed comprise stone, fired clay, concrete and other similar materials. These materials are known on one hand for their high compression strength, but on the other hand also for their high weight. For floors in particular it is desirable to have a sufficiently high compression strength, such that point loads on the floor will not result in deformation of the floor. When a heavy bookcase with thin legs is for instance placed on the floor, it is undesirable for the legs to leave an indentation in the floor.

In the manufacture of a construction panel it is therefore a challenge to combine a high compression strength with an acceptable weight. It is also a challenge to provide further functionalities such as sound damping, heating, insulation and modularity of the construction panels.

It is an object of the invention to provide a construction panel which has at least a heating layer and which can be manufactured with a high resistance to pressure and with an acceptable weight.

For this purpose the invention provides a construction panel for constructing a floor or wall, wherein the construction panel comprises a plurality of layers, wherein the plurality of layers are built up from the underside to the upper side, or from the rear side to the front side, of the construction panel as follows:
- a base plate;
- a first cast layer;
- an intermediate plate;
- a heating layer; and
- a second cast layer;
wherein the layers are framed at least partially by an edge profile and wherein the intermediate plate lies at a distance from the edge profile so that the intermediate plate is fully encapsulated in the first and the second cast layer. The edge profile has a base which is provided to lie on the base plate. A first leg extends downward from the base so as to lie against a side of the base plate, wherein the base has a second leg which extends upward from the base so that a space is delimited by the base plate and the second leg in which the first cast layer, the intermediate plate, the heating layer and the second cast layer are formed

In a specific embodiment the plurality of layers of the construction panel are built up from the underside to the upper side, or from the rear side to the front side, of the construction panel as follows:
- a base plate; preferably incombustible
- a first adhesive layer
- an intermediate plate; preferably insulating
- a second adhesive layer/first cast layer
- an intermediate plate, preferably incombustible
- a heating layer
- a second cast layer.

The invention is based on the insight that plates are known with an extremely good compression strength-weight ratio, and with an acceptable cost price. In practice, these plates typically have limitations which impede the use of the plate in a construction panel. Other plates which have a good compression strength-weight ratio and which are usable in a construction panel however have a considerably higher cost price. An example of a material property which impedes applications of the construction panel is the fire resistance, in other words the combustibility of the plate. Plates with a high combustibility are typically considerably cheaper than less combustible plates or plates which are incombustible.

In the construction panel according to the invention an intermediate plate is fully encapsulated in a first and a second cast layer, or an (incombustible) base plate and an (incombustible) intermediate plate, which cast layers are formed on a base plate. A heating layer is provided on the intermediate plate. The intermediate plate lies at a distance from the edge of the construction panel, which edge is formed by an edge profile. This specific construction allows the share of base plate in the whole to be limited to considerable extent, whereby a material having a higher cost price can be selected for the base plate. Because the intermediate plate is fully encapsulated, a material can be selected which has a good compression strength-weight ratio and which is considerably cheaper than the material of the base plate. The possible adverse properties (for instance higher combustibility) of the selected material have considerably less influence on the construction panel because the intermediate plate is fully encapsulated. The first cast layer and second cast layer, or (incombustible) intermediate plates, can be optimized and the amount of casting material can be minimized or optimized in the layer structure. Because the construction panel has a plurality of layers, a heating layer can also be provided as intermediate layer. This structure allows manufacture of a construction panel which has a higher compression strength, a limited weight and an acceptable cost price, and in which a heating layer is integrated.

Particularly advantageous embodiments of the construction panel according to the invention form the subject-matter of appended dependent claims and/or may become apparent from the figure description below.

The invention further relates to a method for forming a construction panel, comprising the steps of:
- providing a base plate;
- connecting an edge profile to the peripheral edges of the base plate;
- casting a first cast layer onto the base plate;
- placing an intermediate plate on the first cast layer at a distance from the edge profile;
- placing a heating layer on the intermediate plate; and
- casting a second cast layer onto the heating layer and intermediate plate so that the intermediate plate is fully encapsulated in the first and the second cast layer, or (incombustible) base and intermediate plate and the vertical cast layer.

The advantages and effects described above in respect of the construction panel also apply to the method according to the invention. The method can be performed in a conditioned environment, such as a workshop or a factory. The workers can be given the correct materials and tools, and can be trained properly to perform the method according to the invention optimally. A good-quality construction panel is thus obtained.

Particularly advantageous embodiments of the method according to the invention form the subject-matter of appended dependent claims and/or may become apparent from the figure description below.

The invention further relates to a building in which at least one of a floor part and a wall part is formed by at least two construction panels according to the invention, wherein the at least two construction panels are mutually connected at the position of their peripheral edges. The floor constructed in this manner has a high quality, is easy to handle during placing, has a high compression strength and is provided with a heating layer, such that the floor part and/or the wall part constructed with the construction panels is heatable.

The invention will now be further described on the basis of an exemplary embodiment shown in the drawing.

In the drawing:
figure 1 shows a cross-section of a construction panel according to an embodiment of the invention at the position of its edge;
figure 2 shows a cross-section of a connection between two construction panels according to an embodiment of the invention;
figure 3 shows a cross-section of a connection between a construction panel and an edge according to an embodiment of the invention;
figure 4 shows a top view of a construction panel according to an embodiment of the invention; and
figure 5 shows a cross-section of a construction panel according to a further embodiment of the invention at the position of its edge.

The same or similar elements are designated in the drawing with the same reference numerals.

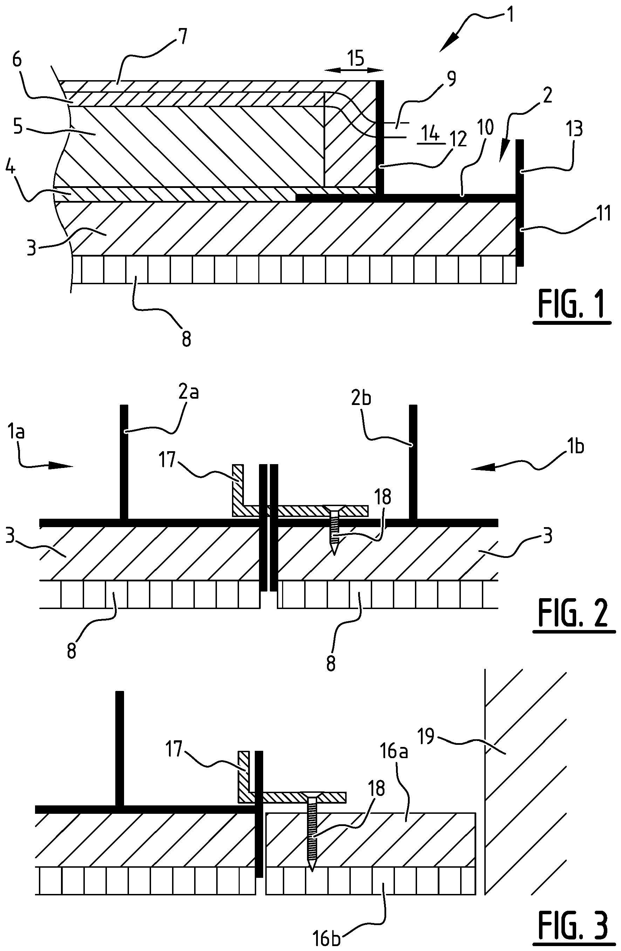

Figure 1 shows a cross-section of a construction panel 1 at the position of an edge. Construction panel 1 has an edge profile 2 which forms the peripheral edges of construction panel 1. Edge profile 2 is positioned on and against a base layer 3. Base layer 3 is formed by a base plate (for instance Glass Fibre-Reinforced Plastic (GRP-reinforced) Magnesium Oxide board, GRP-reinforced foam glass board, GRP-reinforced Aluminium silicate board, cement board, gypsum fibreboard,...). The base plate can be manufactured from any type of usable material, such as for instance metal, wood, glass fibre, magnesium oxide,.... Base plate 3 is preferably rectangular, with a length and a width which substantially determine the dimensions of the construction panel 1. In order to limit the surface area of the unheated edge strips the scale-up of the panel dimensions is determined by a fixed multiplier.

The edge profile 2 (for instance glass fibre-reinforced plastic, cement, carbon, polyvinyl chloride (PVC), polyamide (PA), polyethylene (PE), polyvinylidene difluoride (PVDF),...) has an edge profile base 10 which is placed on the base plate 3 while a first leg 11 extends downward on the peripheral side of edge profile 2, against the edge of base plate 3. Edge profile base 10 is preferably glued to base plate 3. First leg 11 can alternatively or additionally be glued to base plate 3.

Edge profile 2 has a second leg 12 which extends upward from edge profile base 10 and which lies at a distance from the peripheral edge. When the edge profiles 2 are placed on all the edges of base plate 3, an inner trough or reservoir or space is formed by base plate 3 and by the second leg 12 of edge profiles 2. A first cast layer or adhesive layer 4 is arranged herein (for instance 2K adhesive (two-component adhesive), 2K polyurethane resin, 2K polyester resin, 2K epoxy resin,..., all of the foregoing optionally in combination with a filler (for example ceramic microparticles), fibres and/or mixtures of fibres.

When the first cast layer 4 is at least partially cured, an intermediate plate 5 is placed on first cast layer 4. The intermediate plate 5 is placed at a distance from the second leg 12 of edge profile 2. Where mention is made of the distance between the edge and the intermediate plate 5, this refers to this horizontal distance between second leg 12 and intermediate plate 5. The distance in height direction between edge profile base 10 and intermediate plate 5 is less relevant, because base plate 3 is situated under edge profile base 10. The intermediate plate can be manufactured from any usable material, such as for instance a wood fibre board, a hard polystyrene foam board (XPS), an expanded polystyrene board (EPS), a polyurethane board (PUR), a polyisocyanurate board (PIR), a corkboard, a combined cork/rubber board,.... This intermediate plate is preferably manufactured from heat-insulating and sound-damping material in order to thus limit heat loss and contact noise.

A heating layer 6 is placed on intermediate plate 5. Heating layer 6 is preferably formed by an electric heating element. An electric heating element preferably comprises an electrical resistor which extends over the surface of intermediate plate 5. An electrical resistor can for instance be formed as a wire which is laid over the surface in a pattern, for instance a zigzag pattern or meander pattern. In order to greatly enhance the heat distribution and the mechanical strength in respectively the heating layer 6 and the cast layers it is possible to add fibres and/or mixtures of fibres (such as for instance from metal, copper, brass, plastic, glass fibre and/or carbon). A glass fibre-reinforced web with metal or carbon coating with integrated heating cable, or a heat conducting web, for instance a metal mesh, can additionally be placed under and/or over the heating wire so that the heat of the heating wire is distributed via the heat conducting web over the surface. Heating layer 6 can be placed on the intermediate plate in simple manner, or can be glued thereto by for instance a 2K adhesive, 2K polyurethane resin, 2K polyester resin, 2K epoxy resin,..., all of the foregoing optionally in combination with a filler (for example ceramic microparticles), fibres and/or mixtures of fibres.

Because heating layer 6 is situated on intermediate plate 5, which intermediate plate 5 is placed up to a distance from second leg 12 of edge profile 2, a space is created between second leg 12 and the edges of intermediate plate 5 and heating element 6. This space is filled by a second cast layer 7 which extends above heating layer 6. First cast layer 4 and second cast layer 7 together substantially wholly encapsulate intermediate plate 5 and heating layer 6. Intermediate plate 5 and heating layer 6 are hereby fully shielded from the surrounding area. In the event of fire, the fire is unable to easily reach intermediate plate 5. When intermediate plate 5 and/or heating layer 6 is sensitive to water and/or moisture, intermediate plate 5 and heating layer 6 can also be shielded in simple manner in that they are encapsulated. The second cast layer 7 can be manufactured from any usable material, such as for instance a mixture of different mineral building materials in different compositions for increasing the heat capacity, improving the heat conduction and mechanical pressure resistance.

A reinforcing element (not shown) is preferably provided, which extends in second cast layer 7 and is carried with wire anchors through second leg 12 of edge profile 2 and into the functional gutter 14. The second leg is alternatively and/or additionally provided distally with a thickened portion or protrusion or raised edge. In practice both the base plate 3 and the second cast layer 7 have a high compression strength. Because the tensile strength can be lower depending on the chosen materials, it is advantageous to provide a reinforcing element or a thickened portion, protrusion or raised edge. This prevents second cast layer 7 from detaching from base plate 3, for instance when the panel is held upside down. It also provides for an increased tensile strength of base plate 3 and of second cast layer 7. The reinforcing element is preferably manufactured from a metal. This has the advantage that the reinforcing element will not only increase the tensile strength, but will also enhance the heat conduction. The reinforcing element preferably extends through the second leg 12 of edge profile 2 and into the functional gutter. This has the advantage that when the functional gutter is filled, a good anchoring results between panel 1 and the filler material with which the functional gutter is filled. Heat can also be conducted to the functional gutter. A thickened portion, protrusion or raised edge further increases the strength of the edge profile and the strength of the second leg, and thereby also the strength of the edge profile. Due to the edge, the upper side of the second leg can be T-shaped in cross-section, or have in cross-section the shape of a reverse L, whereby the long leg is formed by the second leg and the short leg is formed by the raised edge.

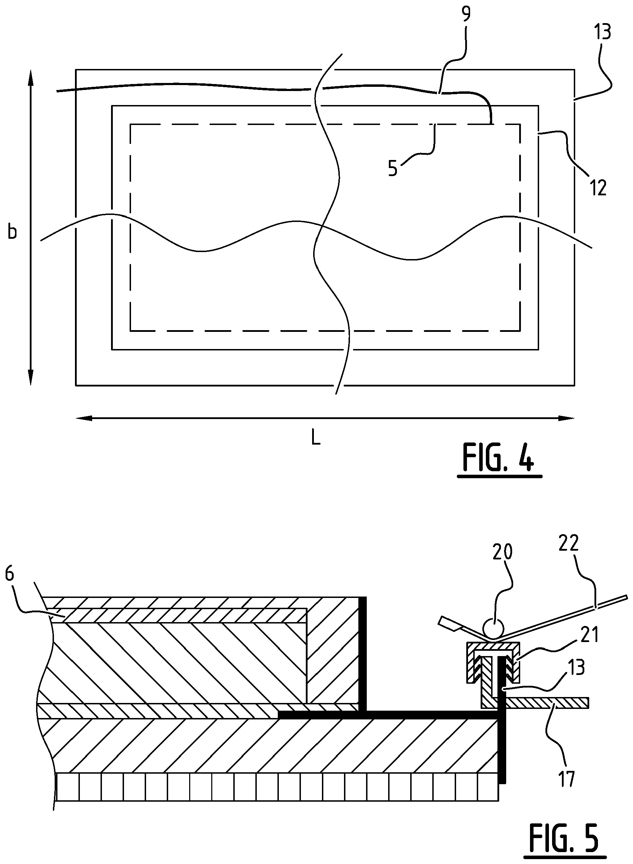

Edge profile 2 further has a third leg 13 extending upward at the position of the peripheral edge of edge profile 2. The third leg 13 lies in line with the first leg 11. First leg 11 and third leg 13 together form the peripheral edge of construction panel 1. Third leg 13 preferably extends less high than second leg 12 in order to allow further components or elements to lie above third leg 13 without compromising the overall height of the construction panel. Connecting clamps can thus be placed on the third leg, as will be elucidated below. A heating wire can also be provided on third leg 13, as illustrated in figure 5. Similarly to the second leg, the third leg can also be provided distally with a thickened portion or protrusion or raised edge. A thickened portion, protrusion or raised edge further increases the strength of the edge profile and the strengths of the third leg, and thereby also the strength of the edge profile. Due to the edge the upper side of the third leg can have the shape of a reverse L, wherein the long leg is formed by the third leg and the short leg is formed by the raised edge. This embodiment is not shown.

A functional gutter 14 is formed between second leg 12 and third leg 13. Cables (for instance of the heating), sensors and/or home installation/domotics can be provided in this functional gutter. Figure 1 thus illustrates that a cable 9 runs from heating layer 6 to functional gutter 14. For this purpose an opening can be provided in second leg 12 so that the cable can run through the second leg of heating layer 6 to functional gutter 14. Heating layer 6 and/or intermediate plate 5 is preferably provided with at least 1, more preferably at least 2 temperature sensors. The temperature sensors allow the temperature of the plate and/or of the surrounding area to be measured. By providing two or more sensors a redundant system is obtained, wherein improper operation of one sensor is compensated for by the other sensor. The plurality of sensors are then preferably placed at a mutual distance, such that temperature can be measured in different zones of the construction panel 1 by the different sensors. The skilled person will appreciate that these sensors are also connected via cables or signal wires. Analogously to the shown cable 9, these cables or signal wires run to the functional gutter 14.

A sound-damping layer 8 (for instance rubber, rubber/cork, mineral wool, wood fibre board for acoustic uncoupling,...) is preferably provided under base plate 3. Sound-damping layer 8 preferably extends beyond first leg 11, in the height direction. This means that, when lying flat, construction panel 1 supports on the sound-damping layer 8 and not on edge profile 2.

Figure 1 shows construction panel 1 in a lying position, wherein construction panel 1 can be used as a floor. The skilled person will appreciate that, because a plurality of cast layers are provided, the lying position corresponds to the position of manufacture of construction panel 1. The skilled person will also appreciate that the construction panel can also be applied in other orientations once construction panel 1 has been manufactured. A wall can thus be formed with one or more construction panels 1. The wall has a functional side and a construction side. Because construction panel 1 comprises a heating element, it will be apparent that the functional side of the wall is the side where the heating generates heat. In figure 1 this is the upper side of the construction panel 1.

Figure 2 shows a cross-section of a connection between two construction panels 1a and 1b. Construction panels 1a and 1b are positioned with their edges substantially against each other. The edge profiles 2a and 2b of the respective construction panels 1a and 1b hereby come to lie against each other or at least substantially against each other. Preferably provided in the third leg of edge profiles 2 is a slot with a length corresponding with dimensions of a connecting profile 17. In figure 2 connecting profile 17 is formed as an L-profile. The L-profile is placed with the long leg through the corresponding slots in the third legs of edge profiles 2a and 2b until the short leg of L-profile 17 lies against the third leg. The length of the long leg of L-profile 17 is preferably substantially equal to the distance between the second leg and the third leg of edge profile 2. This facilitates placing of connecting profile 17. Connecting profile 17 is preferably secured with a screw 18, but can optionally also be glued. The skilled person will appreciate that the shape of the connecting profile 17 will be different when a raised edge or protrusion or thickened portion is formed. Providing a raised edge makes it possible to provide holes which extend downward in the raised edges. A connecting plate or connecting profile with corresponding holes can be provided on the raised edge so that the adjacent third legs can be connected to each other via screws or bolts.

When making a floor or wall, connecting profiles are placed at regular intermediate distances in order to connect construction panels to each other. For this purpose each construction panel has slots in the third leg of the edge profile so as to enable simple connection. Figure 3 shows the manner in which a construction panel 1 can be secured close to a wall 19. Because construction panels 1 have fixed dimensions, it is seldom possible to place construction panels precisely up to and against wall 19. The space between the wall 19 and the construction panel is preferably filled up with filler plate 16a and 16b. A disconnection tape (not shown) can optionally be provided between the wall and filler plate 16a and 16b. Filler plates 16a and 16b preferably have a thickness corresponding with the thickness of base plate 3 and sound-damping layer 8. Filler plates 16a and 16b are typically made to size by a skilled person. When heights of filler plates 16 correspond with the height of base plate 3 and sound-damping layer 8, the construction panel can be secured with a connecting profile 17 in a similar manner as described above. The construction panel is thereby screwed with a screw 18 fixedly to (or glued to) filler plate 16.

Both in the embodiment shown in figure 2 and in the embodiment shown in figure 3 a space is formed on the outer side of the edge profile or intermediate edge profile. In practice this space is used for placing cables (for instance heating cables) or other tubes. After placing of cables or other tubes this space is filled with a liquid or semi-liquid filler material (for instance filling concrete or a mixture of different mineral building materials in different compositions) for increasing the heat capacity, improving the heat conduction and mechanical pressure resistance. In a particular embodiment the same filler material can likewise be arranged on top of the construction panel, so that the upper side of a installed floor or wall has a smooth appearance, without joints or channels.

Figure 4 shows a top view of a construction panel 1 according to a preferred embodiment. Figure 4 illustrates the manner in which cable 9 of the heating layer runs through the functional gutter 19 formed by the second leg 12 and the third leg 13 of the edge profile. Figure 4 also illustrates that intermediate plate 5 lies at a distance from the second leg 12 of the edge profile along the whole periphery of construction profile 1. Intermediate plate 5 hereby lies at a distance from the edge of construction panel 1. This allows encapsulation of the intermediate plate, which has the above-described advantages. It will be apparent that the distance is measured in the plane of construction panel 1. Construction panel 1 is rectangular and has a length 1 and a width b.

Figure 5 shows a preferred situation in which a heating wire 20 is mounted via clamps 21 on the third leg 13 of edge profile 2. In the embodiment of figure 5 construction panel 1 is secured via connecting profile 17. Clamp 21 clamps over the connecting profile and third leg 13. The skilled person will appreciate that when two panels are connected to each other, a clamp 21 with the symmetrical properties can be placed over two adjacent legs 13. Clamp 21 is preferably provided with a strap or connecting strip 22 whereby heating wire 20 can be held and positioned. Providing a heating wire 20 solves the problem described below. In construction panel 1 heating layer 6 does not extend up to the edge of the construction panel, but the heating layer stops at a distance from the edge. A cold zone can hereby result at the position of the edge of construction panel 1. By providing the heating wire 20 on the third leg an additional heating element is placed via the heating wire at the position of the edge, in the potentially cold zone, so as to locally heat it. A more uniform heating can hereby be obtained. The skilled person will appreciate that in a situation shown in figure 3, in which a wider unheated zone results, the heating wire 20 can also be placed in zigzag or meander form over this wider unheated zone so as to heat this zone.

The clamp shown in figure 5 is U-shaped and adapted to an edge profile with a third leg without appreciable thickened portions, protrusions or raised edges. The skilled person will appreciate that when the third leg has a thickened portion, protrusion or raised edge, the form of the clamp can be adapted thereto.

A finishing layer is preferably provided on second cast layer 7 and over edge profiles 2. The finishing layer can be traditional, for instance a tile, laminate, parquet, vinyl, epoxy or other known finishing layer. The finishing layer will determine the visual characteristics of the floor or wall.

When construction panels 1 are manufactured for making a wall therewith, air vents, channels, lighting holes and lighting elements can be integrated in the panel. The heating layers in the panels can be controlled collectively or be controlled individually so as to provide local heating. The specific technical construction allows a panel of determined dimensions to be sawn in order to obtain a panel of smaller dimensions, wherein the heating layer remains functional.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims.

## Claims

1. Construction panel (1) for constructing a floor or wall, wherein the construction panel comprises a plurality of layers, wherein the plurality of layers comprise from a rear side to a front side of the construction panel:
- a base plate (3);
- a first cast layer (4);
- an intermediate plate (5);
- a heating layer (6); and
- a second cast layer (7);
wherein the layers are framed at least partially by an edge profile (2) and wherein the intermediate plate lies at a distance from the edge profile so that the intermediate plate is fully encapsulated in the first and the second cast layer, **characterized in that** the edge profile has a base (10) which is provided to lie on the base plate, wherein a first leg (11) extends downward from the base so as to lie against a side of the base plate, wherein the base has a second leg (12) which extends upward from the base so that a space is delimited by the base plate and the second leg in which the first cast layer, the intermediate plate, the heating layer and the second cast layer are formed.

2. Construction panel according to claim 1, wherein a sound-damping layer (8) is further provided behind the base plate.

3. Construction panel according to any one of the foregoing claims, wherein the heating layer comprises an electrical resistor which is preferably connected to a heat distributing layer such as a metal web.

4. Construction panel according to claim 1, wherein the first leg forms a peripheral edge of the construction panel.

5. Construction panel according to claim 1 or 4, wherein the second leg is placed at a distance from a peripheral edge of the construction panel.

6. Construction panel according to any one of the foregoing claims, wherein the base further has a third leg (13) which extends upward from the base at the position of the peripheral edge of the construction panel.

7. Construction panel according to any one of the foregoing claims, wherein the base plate is manufactured from: Glass Fibre-Reinforced Plastic (GRP) Magnesium Oxide, GRP-reinforced foam glass, GRP-reinforced Aluminium silicate, cement or gypsum fibre.

8. Construction panel according to any one of the foregoing claims, wherein the intermediate plate is manufactured from: wood fibre, hard polystyrene foam (XPS), expanded polystyrene (EPS), polyurethane (PUR), polyisocyanurate (PIR), cork or combined cork/rubber.

9. Construction panel according to any one of the foregoing claims, wherein the first cast layer is manufactured from: 2K adhesive, 2K polyurethane resin, 2K polyester resin, 2K epoxy resin, all of the foregoing optionally in combination with a filler, fibres and/or mixtures of fibres.

10. Construction panel according to any one of the foregoing claims, wherein the second cast layer is manufactured from: 2K adhesive, 2K polyurethane resin, 2K polyester resin, 2K epoxy resin, all of the foregoing optionally in combination with a filler, fibres and/or mixtures of fibres.

11. Construction panel according to any one of the foregoing claims, wherein the edge profile is manufactured from: glass fibre-reinforced plastic, cement, carbon, polyvinyl chloride (PVC), polyamide (PA), polyethylene (PE), polyvinylidene difluoride (PVDF).

12. Method for forming a construction panel (1) comprising the steps of:
- providing a base plate (3);
- connecting an edge profile (2) to the peripheral edges of the base plate;
- casting a first cast layer (4) onto the base plate;
- placing an intermediate plate (5) on the first cast layer at a distance from the edge profile;
- placing a heating layer (6) on the intermediate plate; and
- casting a second cast layer (7) onto the heating layer and intermediate plate so that the intermediate plate is fully encapsulated in the first and the second cast layer.

13. Building in which at least one of a floor part and a wall part is formed by at least two construction panels according to claims 1-11, wherein the at least two construction panels are mutually connected at the position of their peripheral edges.

## Patentansprüche

1. Bauplatte (1) zum Bauen eines Bodens oder einer Wand, wobei die Bauplatte eine Vielzahl von Schichten umfasst, wobei die Vielzahl von Schichten von einer Rückseite zu einer Vorderseite der Bauplatte umfasst:
- eine Basisplatte (3);
- eine erste Verputzschicht (4);
- eine Zwischenplatte (5);
- eine Heizschicht (6); und
- eine zweite Verputzschicht (7);
wobei die Schichten mindestens teilweise durch ein Kantenprofil (2) eingefasst sind und wobei die Zwischenplatte in einem Abstand von dem Kantenprofil liegt, sodass die Zwischenplatte in der ersten und der zweiten Verputzschicht vollständig eingekapselt ist, **dadurch gekennzeichnet, dass** das Kantenprofil eine Basis (10) aufweist, die bereitgestellt ist, um auf der Basisplatte zu liegen, wobei sich ein erster Schenkel (11) von der Basis nach unten erstreckt, um an einer Seite der Basisplatte zu liegen, wobei die Basis einen zweiten Schenkel (12) aufweist, der sich von der Basis nach oben erstreckt, sodass ein Raum durch die Basisplatte und den zweiten Schenkel begrenzt wird, in dem die erste Verputzschicht, die Zwischenplatte, die Heizschicht und die zweite Verputzschicht ausgebildet sind.

2. Bauplatte nach Anspruch 1, wobei ferner hinter der Basisplatte eine schalldämpfende Schicht (8) bereitgestellt ist.

3. Bauplatte nach einem der vorstehenden Ansprüche, wobei die Heizschicht einen elektrischen Widerstand umfasst, der vorzugsweise mit einer Wärmeverteilungsschicht wie einer Metallbahn verbunden ist.

4. Bauplatte nach Anspruch 1, wobei der erste Schenkel eine Umfangskante der Bauplatte ausbildet.

5. Bauplatte nach Anspruch 1 oder 4, wobei der zweite Schenkel in einem Abstand von einer Umfangskante der Bauplatte platziert ist.

6. Bauplatte nach einem der vorstehenden Ansprüche, wobei die Basis ferner einen dritten Schenkel (13) aufweist, der sich von der Basis an der Position der Umfangskante der Bauplatte nach oben erstreckt.

7. Bauplatte nach einem der vorstehenden Ansprüche, wobei die Basisplatte hergestellt ist aus: Glasfaserverstärktem Kunststoff (GRP) Magnesiumoxid, GRP-verstärktem Schaumglas, GRP-verstärktem Aluminiumsilicat, Zement oder Gipsfaser.

8. Bauplatte nach einem der vorstehenden Ansprüche, wobei die Zwischenplatte hergestellt ist aus: Holzfaser, Hartpolystyrolschaum (XPS), expandiertem Polystyrol (EPS), Polyurethan (PUR), Polyisocyanurat (PIR), Kork oder kombiniertem Kork/Kautschuk.

9. Bauplatte nach einem der vorstehenden Ansprüche, wobei die erste Verputzschicht hergestellt ist aus: 2K-Klebstoff, 2K-Polyurethanharz, 2K-Polyesterharz, 2K-Epoxidharz, alle vorstehenden optional in Kombination mit einem Füllstoff, Fasern und/oder Mischungen von Fasern.

10. Bauplatte nach einem der vorstehenden Ansprüche, wobei die zweite Verputzschicht hergestellt ist aus: 2K-Klebstoff, 2K-Polyurethanharz, 2K-Polyesterharz, 2K-Epoxidharz, alle vorstehenden optional in Kombination mit einem Füllstoff, Fasern und/oder Mischungen von Fasern.

11. Bauplatte nach einem der vorstehenden Ansprüche, wobei das Kantenprofil hergestellt ist aus: glasfaserverstärktem Kunststoff, Zement, Kohlenstoff, Polyvinylchlorid (PVC), Polyamid (PA), Polyethylen (PE), Polyvinylidendifluorid (PVDF).

12. Verfahren zum Ausbilden einer Bauplatte (1), umfassend die Schritte:
- Bereitstellen einer Basisplatte (3);
- Verbinden eines Kantenprofils (2) mit den Umfangskanten der Basisplatte;
- Verputzen einer ersten Verputzschicht (4) auf die Basisplatte;
- Platzieren einer Zwischenplatte (5) auf der ersten Verputzschicht in einem Abstand von dem Kantenprofil;
- Platzieren einer Heizschicht (6) auf der Zwischenplatte; und
- Verputzen einer zweiten Verputzschicht (7)
auf die Heizschicht und die Zwischenplatte, sodass die Zwischenplatte in der ersten und der zweiten Verputzschicht vollständig eingekapselt ist.

13. Gebäude, in dem mindestens eines von einem Bodenteil und einem Wandteil durch mindestens zwei Bauplatten nach den Ansprüchen 1 bis 11 ausgebildet ist, wobei die mindestens zwei Bauplatten an der Position ihrer Umfangskanten miteinander verbunden sind.

## Revendications

1. Panneau de construction (1) pour la construction d'un plancher ou d'un mur, dans lequel le panneau de construction comprend une pluralité de couches, dans lequel la pluralité de couches s'étend d'un côté arrière à un côté avant du panneau de construction :
- une plaque de base (3) ;
- une première couche coulée (4) ;
- une plaque intermédiaire (5) ;
- une couche chauffante (6) ; et
- une seconde couche coulée (7) ;
dans lequel les couches sont encadrées au moins partiellement par un profilé de bord (2) et dans lequel la plaque intermédiaire se trouve à une certaine distance du profilé de bord de sorte que la plaque intermédiaire est entièrement encapsulée dans la première et la seconde couche coulée, **caractérisé en ce que** le profile de bord a une base (10) qui est prévue pour reposer sur la plaque de base, dans lequel un premier pied (11) s'étend vers le bas à partir de la base de manière à reposer contre un côté de la plaque de base, dans lequel la base a un deuxième pied (12) qui s'étend vers le haut à partir de la base de manière à ce qu'un espace soit délimité par la plaque de base et le deuxième pied dans lequel la première couche de coulée, la plaque intermédiaire, la couche chauffante et la seconde couche de coulée sont formées.

2. Panneau de construction selon la revendication 1, dans lequel une couche d'insonorisation (8) est également prévue derrière la plaque de base.

3. Panneau de construction selon l'une quelconque des revendications précédentes, dans lequel la couche chauffante comprend une résistance électrique qui est de préférence reliée à une couche de distribution de la chaleur telle qu'une bande métallique.

4. Panneau de construction selon la revendication 1, dans lequel le premier pied forme un bord périphérique du panneau de construction.

5. Panneau de construction selon la revendication 1 ou 4, dans lequel le deuxième pied est placé à une certaine distance d'un bord périphérique du panneau de construction.

6. Panneau de construction selon l'une quelconque des revendications précédentes, dans lequel la base comporte en outre un troisième pied (13) qui s'étend vers le haut à partir de la base à la position du bord périphérique du panneau de construction.

7. Panneau de construction selon l'une quelconque des revendications précédentes, dans lequel la plaque de base est fabriquée à partir : d'oxyde de magnésium de plastique renforcé de fibres de verre (PRV), de verre mousse renforcé de PRV, de silicate d'aluminium renforcé de PRV, de fibre de ciment ou de gypse.

8. Panneau de construction selon l'une quelconque des revendications précédentes, dans lequel la plaque intermédiaire est fabriquée à partir : de fibres de bois, de mousse de polystyrène rigide (XPS), de polystyrène expansé (EPS), de polyuréthane (PUR), de polyisocyanurate (PIR), de liège ou de combinaison liège/caoutchouc.

9. Panneau de construction selon l'une quelconque des revendications précédentes, dans lequel la première couche coulée est fabriquée à partir : d'adhésif 2K, de résine polyuréthane 2K, de résine polyester 2K, de résine époxy 2K, tous ces éléments étant éventuellement combinés à une charge, à des fibres et/ou à des mélanges de fibres.

10. Panneau de construction selon l'une quelconque des revendications précédentes, dans lequel la seconde couche moulée est fabriquée à partir : d'adhésif 2K, de résine polyuréthane 2K, de résine polyester 2K, de résine époxy 2K, tous ces éléments étant éventuellement combinés à une charge, à des fibres et/ou à des mélanges de fibres.

11. Panneau de construction selon l'une quelconque des revendications précédentes, dans lequel le profile de bord est fabriqué à partir : de plastique renforcé de fibres de verre, de ciment, de carbone, de chlorure de polyvinyle (PVC), de polyamide (PA), de polyéthylène (PE), de difluorure de polyvinylidène (PVDF).

12. Procédé de formation d'un panneau de construction (1) comprenant les étapes suivantes :
- la fourniture d'une plaque de base (3) ;
- le raccord d'un profile de bord (2) aux bords périphériques de la plaque de base ;
- la coulée d'une première couche de coulée (4) sur la plaque de base ;
- le placement d'une plaque intermédiaire (5) sur la première couche coulée à une certaine distance du profil de bord ;
- le placement d'une couche chauffante (6) sur la plaque intermédiaire ; et
- la coulée d'une seconde couche de coulée (7)
sur la couche chauffante et la plaque intermédiaire de manière à ce que la plaque intermédiaire soit entièrement encapsulée dans la première et la seconde couche moulée.

13. Bâtiment dans lequel au moins une partie de plancher et une partie de mur sont formées par au moins deux panneaux de construction selon les revendications 1 à 11, dans lequel les au moins deux panneaux de construction sont mutuellement reliés à la position de leurs bords périphériques.
